# EUROPÄISCHE PATENTSCHRIFT

(11) **EP 1 531 978 B1**
(45) Veröffentlichungstag und Bekanntmachung des Hinweises auf die Patenterteilung: **26.09.2007**
(21) Anmeldenummer: 03790723.5
(22) Anmeldetag: 16.08.2003
(51) Int. Cl.: B29C 49/78, B29C 49/42

(54) **VERFAHREN UND VORRICHTUNG ZUR PNEUMATISCHEN STEUERUNG**
PNEUMATIC CONTROL METHOD AND DEVICE
PROCEDE ET DISPOSITIF DE REGULATION PNEUMATIQUE

(30) Priorität: 31.08.2002 DE 10240252
(43) Veröffentlichungstag der Anmeldung: 25.05.2005
(73) Patentinhaber: SIG Technology Ltd., 8212 Neuhausen am Rheinfall (CH)
(72) Erfinder: LITZENBERG, Michael, 21502 Geesthacht (DE)
(74) Vertreter: Klickow, Hans-Henning
(86) Internationale Anmeldenummer: PCT/DE2003/002745
(87) Internationale Veröffentlichungsnummer: WO 2004/020173

(56) Entgegenhaltungen:
- EP-A- 1 152 155
- WO-A-95/22413
- DE-A- 10 028 932
- DE-A- 10 052 664
- GB-A- 914 691
- GB-A- 2 203 195
- US-B1- 6 264 457

## Beschreibung

Die Erfindung betrifft ein Verfahren zur pneumatischen Steuerung einer Blasmaschine für die Herstellung von Behältern aus spritzgegossenen Vorformlingen, bei dem im Bereich einer Versorgungsleitung zwischen einer Betriebsmittelquelle für ein pneumatisches Betriebsmittel und einer Aufnahmeeinrichtung für werkstücke eine Zufuhr des Betriebsmittels von mindestens einer Stelleinrichtung gesteuert wird und bei dem durch die Stelleinrichtung ein zeitlich veränderlicher Druck im Bereich der Aufnahmeeinrichtung generiert wird.

Die Erfindung betrifft darüber hinaus eine Vorrichtung zur Blasformung von Behältern mit einer Heizeinrichtung für spritzgegossene Vorformlinge und einer pneumatischen Steuerung, die eine im Bereich einer versorgungsleitung zwischen einer Betriebsmittelquelle für ein pneumatisches Betriebsmittel und einer Aufnahmeeinrichtung für Werkstücke angeordnete Stelleinrichtung aufweist, die zur Vorgabe eines zeitlich veränderlichen Druckes im Bereich der Aufnahmeeinrichtung angesteuert ist.

Derartige Verfahren und Vorrichtungen werden beispielsweise im Zusammenhang mit der Herstellung oder Weiterverarbeitung von blasgeformten Behältern eingesetzt. Eine Anwendung bei der Herstellung von blasgeformten Behältern besteht darin, einen Blasdruckverlauf vorzugeben. Die Vorgabe erfolgt typischerweise durch eine Ventilsteuerung, die zunächst einen niedrigeren Blasdruck und anschließend einen höheren Blasdruck zuschaltet. Anwendungen bei einer Weiterverarbeitung von blasgeformten Behältern bestehen im Zusammenhang mit Plasmabeschichtungen, bei denen sequentiell nacheinander Unterdrücke mit unterschiedlichem Druckpegel durch Ventilansteuerungen zugeführt werden.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die vorformlinge können aber auch mit anderen Trageinrichtungen gehandhabt werden. Die Verwendung von Greifzangen zur Handhabung von vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Aus der DE-A-100 28 932 ist eine Regeleinrichtung für ein Handhabungsgerät bekannt, bei dem ein in einem Zylinder beweglicher Kolben verwendet wird. Eine Betätigung erfolgt unter Verwendung eines Druckreglers, der einen sensorisch erfaßten Druck auswertet.

Aus der GB-A-22 03 195 ist eine Regelungseinrichtung für einen pneumatisch angetriebenen Kolben bekannt. Der Kolben kann zur Durchführung einer Positionierung zweiseitig mit Druck beaufschlagt werden und eine Kolbenposition wird sensorisch erfaßt.

In der GB-A-914 691 wird ein elektropneumatisches Regelungssystem für Maschinen zum Extrusionsblasformen beschrieben. Unter Verwendung des Steuerungssystems ist es möglich, den Blasdruck im Bereich der Extrusionseinrichtung zu steuern.

Aus der US-B1-6,264,457 ist eine Eingabeeinrichtung bekannt, mit der vorformlinge in eine Blasmaschine eingegeben werden. Die als Stirnrad ausgebildete Eingabeeinrichtung wird von einem Servoantrieb betätigt. Eine Eingabeeinrichtung für die Vorformlinge ist unter Verwendung eines Fluidzylinders konstruiert.

Die bekannten Verfahren und Vorrichtungen beschränken sich darauf, eine Ansteuerung der Stellelemente durchzuführen und den sich ergebenden tatsächlichen Druckverlauf zu akzeptieren. Ein konkret vorliegender Druckverlauf hängt von einer Vielzahl aktuell vorliegender Prozeßrandbedingungen ab und verändert sich bei veränderlichen Prozeßrandbedingungen. Untersuchungen, ob die sich ergebenden Druckverläufe tatsächlich im Hinblick auf eine Prozeßoptimierung wenigstens näherungsweise optimale zeitliche Druckverläufe darstellen, waren bislang nicht durchgeführt worden.

Aufgabe der vorliegenden Erfindung ist es, ein Verfahren der einleitend genannten Art derart zu verbessern, daß ein optimierter Prozeßablauf bei gleichzeitig einfacher gerätetechnischer Realisierung unterstützt wird.

Diese Aufgabe wird erfindungsgemäß dadurch gelöst, daß die Stelleinrichtung derart geregelt wird, daß ein vorgebbarer zeitlicher Verlauf des Druckes während der Durchführung eines Blasvorganges mindestens in der Umgebung eines Drucksensors mit einer vorgebbaren maximalen Toleranz erzeugt wird und daß der zeitliche Verlauf eines Prozeßdruckes eines Blasgases zur Expansion des vorformlings in den Behälter vorgegeben wird.

Weitere Aufgabe der vorliegenden Erfindung ist es, eine Vorrichtung der einleitend genannten Art derart zu konstruieren, daß sowohl ein einfacher konstruktiver Aufbau erreicht als auch ein vorteilhafter Prozeßablauf unterstützt wird.

Diese Aufgabe wird erfindungsgemäß dadurch gelöst, daß die Stelleinrichtung mit einer Regeleinrichtung gekoppelt ist, die eine Verbindung zu mindestens einem Drucksensor aufweist und daß die Regeleinrichtung einen Verlaufsspeicher für ein Sollwertprofil des zeitlichen Druckverlaufes während der Durchführung eines Blasvorganges aufweist sowie mit einer Ablaufsteuerung gekoppelt ist, die zyklisch eine Generierung des Druckverlaufes entsprechend dem abgespeicherten Sollwertprofil derart vorgibt, daß der zeitliche Verlauf eines Prozeßdruckes eines Blasgases zur Expansion des Vorformlings in den Behälter definiert ist.

Durch die Regelung des Druckes entsprechend eines zeitlich veränderlichen Sollwertprofils ist es möglich, einen an den jeweiligen aktuellen Prozeßzustand angepaßten optimalen Druckverlauf bereitzustellen. Die Prozeßführung erfolgt somit nicht in Abhängigkeit von einem sich mehr oder weniger zufällig in Abhängigkeit von Randbedingungen einstellenden zeitlichen Druckverlauf, sondern geregelt und reproduzierbar in Abhängigkeit von einem definiert vorgegebenen Profil.

Zusätzlich zu der zu erreichenden Prozeßoptimierung kann auch eine gerätetechnische Vereinfachung realisiert werden. Gemäß dem Stand der Technik werden typischerweise mehrere Ventile verwendet, um zeitabhängig nacheinander unterschiedliche Druckpegel zuzuschalten. Durch die erfindungsgemäße Regelung des Druckverlaufes ist es in der Regel ausreichend, eine einzige Stelleinrichtung zu verwenden, die den jeweiligen Druckpegel einstellt.

Eine vollautomatische Regelung wird insbesondere dadurch unterstützt, daß als Stelleinrichtung ein elektromechanisch betätigtes Ventil gesteuert wird.

Zur Anpassung an unterschiedliche Anwendungsanforderungen wird vorgeschlagen, daß die Stelleinrichtung von einer programmierbaren Steuerung angesteuert wird.

Eine besonders bevorzugte Ausführungsform besteht darin, daß als Stelleinrichtung ein Proportionalventil angesteuert wird.

Zur Unterstützung sowohl eines Haltens eines vorgegebenen Druckes als auch eines Absenkens oder eines Erhöhens des Druckes ist vorgesehen, daß als Stelleinrichtung ein Drei-Wege-Proportionalventil angesteuert wird.

Eine typische Anwendung besteht darin, daß der Druck bei der Durchführung eines Blasvorganges gesteuert wird.

Zur Unterstützung hoher Produktionsraten wird vorgeschlagen, daß eine Druckversorgung für mindestens eine auf einem rotierenden Blasrad positionierte Blasstation gesteuert wird.

Zur Unterstützung einer toleranzarmen Druckrealisierung am vorgesehenen Anwendungsort wird vorgeschlagen, daß von der Stelleinrichtung der geregelte Druck mit geringem räumlichen Abstand zur Aufnahmeeinrichtung bereitgestellt wird.

Ein kompakter Aufbau bei hoher Regelgüte wird auch dadurch unterstützt, daß die Stelleinrichtung gemeinsam mit der Aufnahmeeinrichtung von einem rotierenden Tragrad transportiert wird.

Bei blastechnischen Anwendungen ist insbesondere vorgesehen, daß ein Überdruck gesteuert wird.

Eine umfassende Anwendbarkeit wird dadurch unterstützt, daß ein Druck mit einem Druckniveau bis zu 40 bar gesteuert wird.

Eine verbesserte Regelungsqualität kann dadurch bereitgestellt werden, daß der Druck von einem zweistufigen Proportionalventil geregelt wird.

Eine kompakte Anordnung bei gleichzeitig verlustarmer und sehr genauer Regelung wird dadurch erreicht, daß die Stelleinrichtung mit einem von einem Ventilkörper mindestens bereichsweise verschließbaren Strömungsweg versehen ist.

Eine typische Konstruktion besteht darin, daß ein Innenraum der Stelleinrichtung über einen Druckeinlaß mit der Betriebsmittelquelle verbindbar ist.

Ebenfalls ist daran gedacht, daß der Innenraum der Stelleinrichtung über einen Entlüftungsanschluß mit einer Umgebung verbindbar ist.

Ein Anschluß der vorgesehenen Aufnahmeeinrichtung für die Werkstücke erfolgt dadurch, daß der Innenraum der Stelleinrichtung über einen Druckauslaß mit der Aufnahmeeinrichtung verbindbar ist.

Eine Regelung mit geringem Energieaufwand wird dadurch unterstützt, daß der Ventilkörper von einem elektrisch gesteuerten Proportionalmagneten entgegen einer Kraft einer Rückstellfeder positionierbar angeordnet ist.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine schematische Darstellung eines zweistufigen Proportionalregelventils,
- Fig. 6: eine schematische Darstellung einer als Proportionalventil ausgeführten Stelleinrichtung mit Regeleinrichtung und
- Fig. 7: beispielhafte Verläufe für zeitabhängige Druckprofile bei der Durchführung eines Blasvorganges.

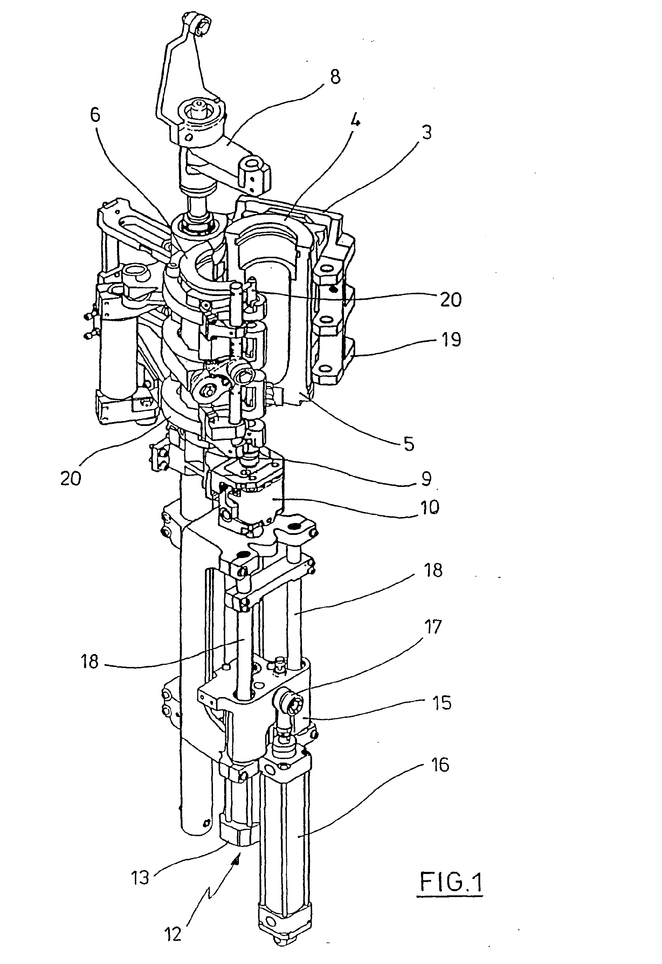

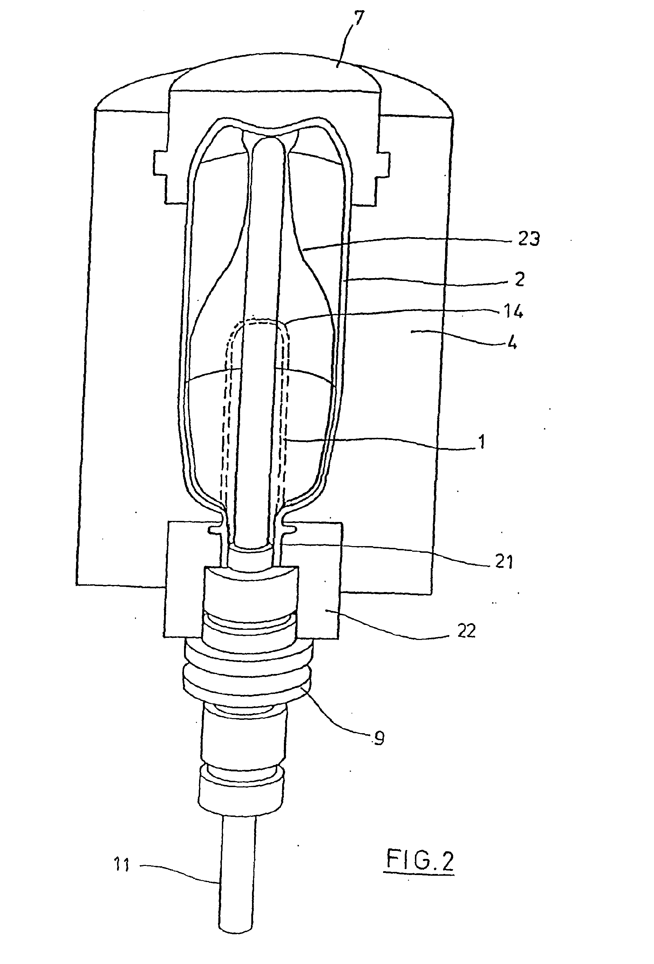

Die verwendung der Vorrichtung zur pneumatischen Steuerung wird zur Steuerung der Blasluftzuführung bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

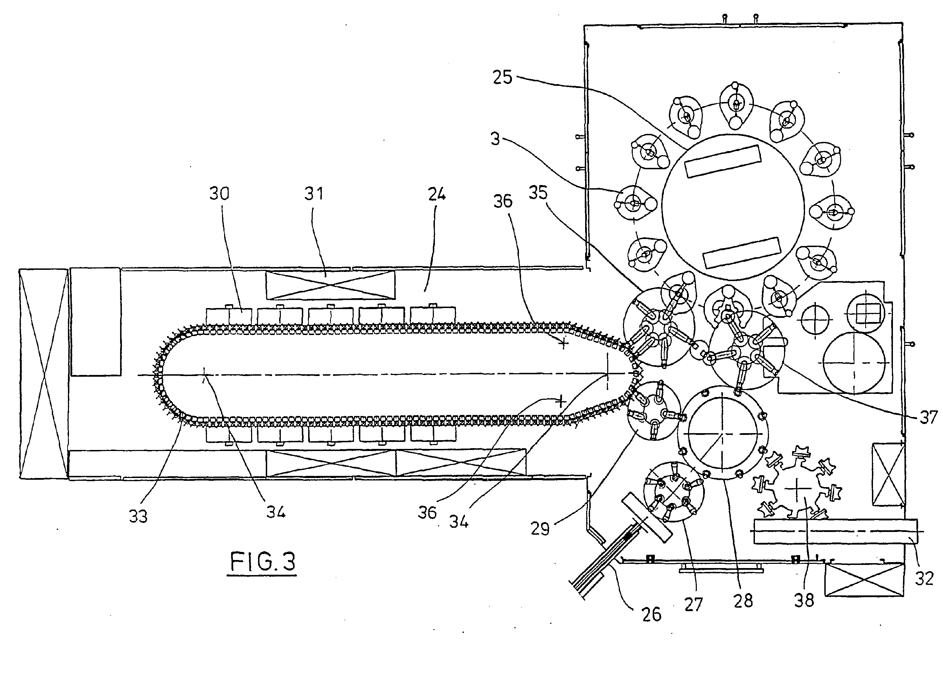

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

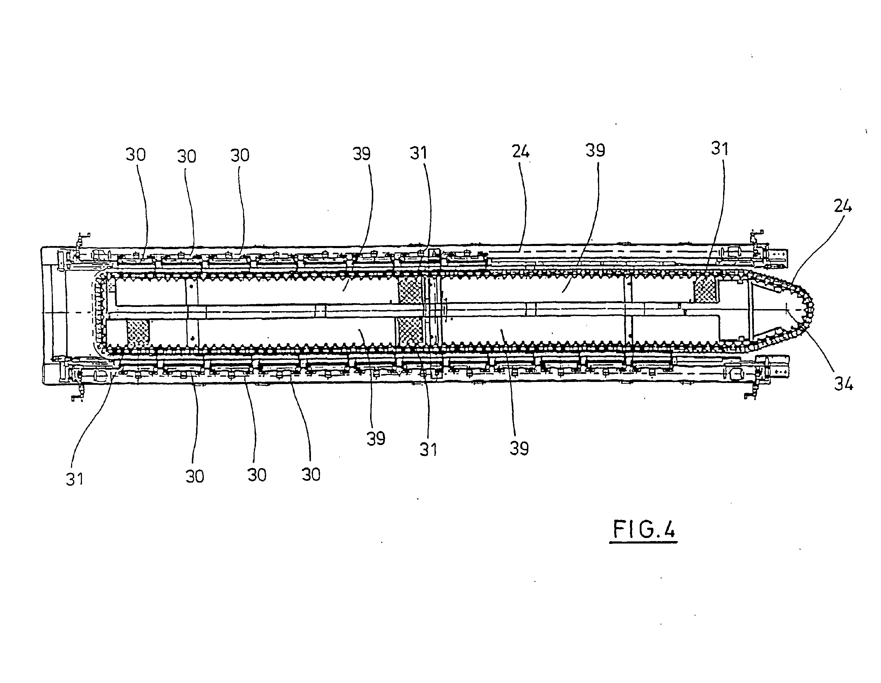

In der in Fig. 4 dargestellten modifizierten Heizstrecke. (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

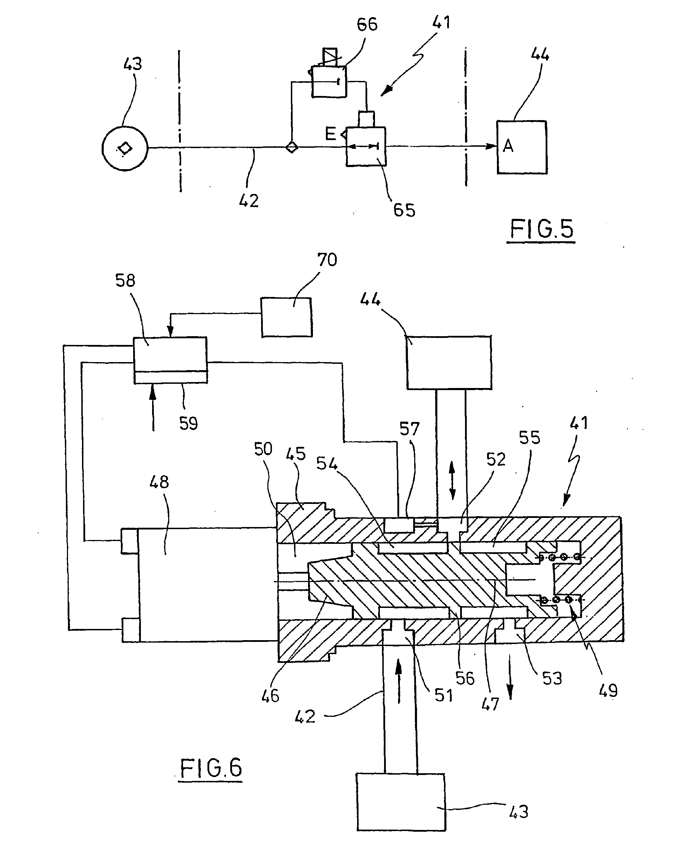

Fig. 5 zeigt eine Stelleinrichtung (41), die im Bereich einer Versorgungsleitung (42) zwischen einer Betriebsmittelquelle (43) für ein pneumatisches Betriebsmittel und einer Aufnahmeeinrichtung (44) für Werkstücke angeordnet ist. Als Betriebsmittelquelle (43) können beispielsweise ein Kompressor oder eine vakuumpumpe eingesetzt werden. Die Aufnahmeeinrichtung (44) kann als Blasstation (3) oder als eine Plasmastation zur Plasmabehandlung von Werkstücken realisiert werden.

Bei dem in Fig. 5 dargestellten Ausführungsbeispiel ist die Stelleinrichtung (41) als zweistufig geregeltes Proportionalventil realisiert. Eine Hauptstufe (65) der Stelleinrichtung (41) und ein Steuerregler (66) sind gemeinsam mit der Betriebsmittelquelle (43) verbunden, so daß keine separate Leitung zur Zuführung von Steuerluft für den Steuerregler (66) erforderlich ist. Dies ermöglicht es, die Hauptstufe (65) und den Steuerregler (66) als eine Einheit mit intern verlaufenden Luftkanälen zu realisieren. Über den Steuerregler (66) erfolgt eine Domdruckregelung der Hauptstufe (65) und hierdurch eine Vorgabe des resultierenden Druckes im Bereich der Aufnahmeeinrichtung (44).

Bei dem in Fig. 6 dargestellten Ausführungsbeispiel ist die Stelleinrichtung (41) ebenfalls als ein Proportionalventil realisiert, bei dem innerhalb eines ventilgehäuses (45) ein Ventilkörper (46) in Richtung einer Ventillängsachse (47) positionierbar angeordnet ist. Zur Positionierung des Ventilkörpers (46) ist ein Proportionalmagnet (48) verwendet, der den Ventilkörper (46) entgegen der Kraft einer Rückstellfeder (49) verschiebt. In einen den Ventilkörper (46) aufnehmenden Innenraum (50) des Ventilgehäuses (45) münden ein Druckeinlaß (51), ein Druckauslaß (52) sowie ein Entlüftungsanschluß (53) ein.

Beim dargestellten Ausführungsbeispiel ist der Ventilkörper (46) im wesentlichen zylindrisch gestaltet und im Bereich einer äußeren Mantelfläche mit zwei Umfangsnuten (54, 55) versehen, die relativ zueinander von einem Trennsteg (56) separiert sind. Der Trennsteg (56) ist derart dimensioniert, daß er bei einer Längsverschiebung des Ventilkörpers (46) entweder den Druckauslaß (52) vollständig verschließt oder mit einem vorgebbaren Strömungswiderstand entweder mit dem Druckeinlaß (51) oder dem Entlüftungsanschluß (53) verbindet. Ein aktueller Druck im Bereich des Druckauslasses (52) wird über einen Drucksensor (57) erfaßt. Der Drucksensor (57) ist an eine Regeleinrichtung (58) angeschlossen, die einen Verlaufsspeicher (59) für ein Sollwertprofil des Druckverlaufes aufweist und die darüber hinaus mit dem elektrisch angesteuerten Proportionalmagneten (48) verbunden ist. Aufgrund der Druckerfassung mit Hilfe des Drucksensors (57) ist das im Bereich des Verlaufs-Speichers (59) vorgegebene Druckprofil zu realisieren.

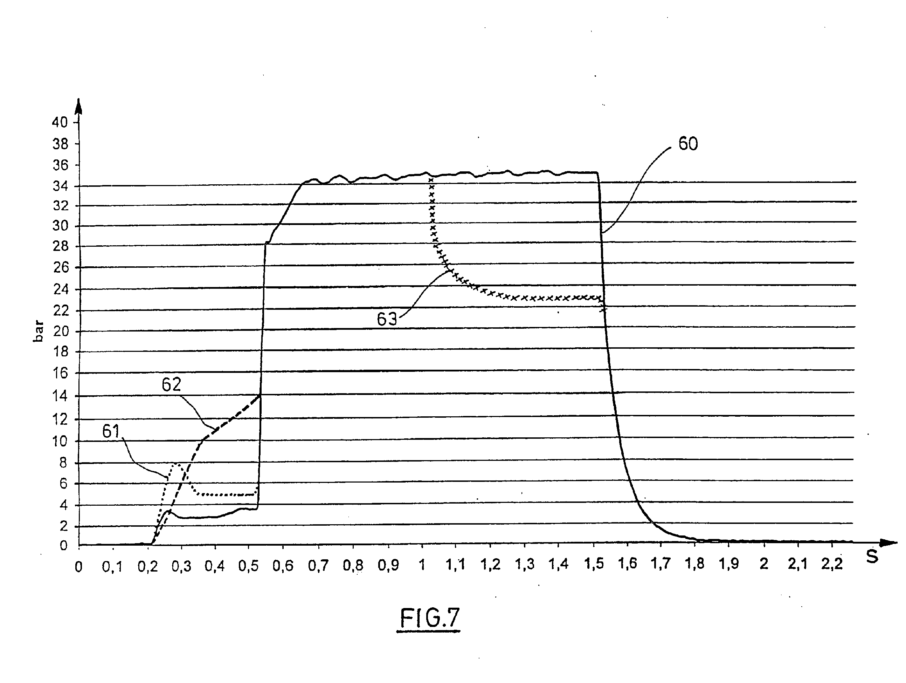

Fig. 7 zeigt typische Druckverläufe bei der blastechnischen Herstellung von Behältern. Der Druckverlauf (60) zeigt einen konventionellen Blasdruckverlauf bei einer Verwendung von zwei Blasventilen zur Zuschaltung einer Vorblasstufe mit einem Druck von etwa 3 bar für eine Zeitdauer von etwa 0,3 Sekunden und einer Hauptblasstufe mit einer Zuschaltung eines Druckes von etwa 35 bar für eine Zeitdauer von etwa 1 Sekunde. Für einen Druckablaß wird ein Entlüftungsventil aktiviert. Für die Realisierung des Druckverlaufes (60) werden somit typischerweise drei ventile verwendet, die in der Regel als Zwei/Zwei-Wegeventile ausgebildet sind.

Der Druckverlauf (61) wurde gegenüber dem Druckverlauf (60) im Bereich des Vorblasbereiches variiert. Es wird hier beim Vorblasen eine Vordruckspitze von etwa 8 bar mit anschließender kontrollierter Absenkung auf etwa 5 bar realisiert. Ein derartiger Verlauf des Druckes während der vorblasphase führt zu einer verbesserten Materialverteilung in der geblasenen Flasche, da zu einem Beginn des Blasvorganges mehr Material aus dem Bereich des Flaschenhalses herausgezogen wird.

Der Druckverlauf (62) realisiert während der Vorblasphase einen ständig ansteigenden Druckverlauf. Der Druckanstieg ist hierbei in zwei Segmente mit jeweils etwa linearem verlauf unterteilt. Eine Überleitung der Segmente ineinander findet bezogen auf einen Start des Blasvorganges nach etwa 0,35 Sekunden und bei etwa 10 bar statt. Der Druckverlauf im zweiten linearen Segment verläuft mit etwas geringerer Steigung als im ersten Segment. Ein derartiger Verlauf des Druckes in der Vorblasphase führt bereits sehr frühzeitig zu einer Annäherung der Flaschenkontur an eine vorgesehene Endkontur.

Der Druckverlauf (63) zeigt nach etwa 1 Sekunde eine kontrollierte Druckabsenkung von etwa 35 bar auf etwa 23 bar. Ein derartiger Blasdruckverlauf nutzt die beginnende Materialverfestigung des geblasenen Behälters aus und hält den Druck lediglich in einem Umfang aufrecht, der für einen ausreichenden Kontakt des Materials des Behälters mit der Blasform erforderlich ist, um einen weiteren Kühlvorgang durch Wärmeübergang zu unterstützen. Die Druckabsenkung entlastet mechanisch das Verriegelungssystem der Blasstation. Standzeiten der Blasformanlage können hierdurch erhöht werden.

## Patentansprüche

1. Verfahren zur pneumatischen Steuerung einer Blasmaschine für die Herstellung von Behältern (2) aus spritzgegossenen Vorformlingen (1), bei dem im Bereich einer Versorgungsleitung (42) zwischen einer Betriebsmittelquelle (43) für ein pneumatisches Betriebsmittel und einer Aufnahmeeinrichtung (44) für Werkstücke eine Zufuhr des Betriebsmittels von mindestens einer Stelleinrichtung (41) gesteuert wird und bei dem durch die Stelleinrichtung (41) ein zeitlich veränderlicher Druck im Bereich der Aufnahmeeinrichtung (44) generiert wird, **dadurch gekennzeichnet, daß** die Stelleinrichtung (41) derart geregelt wird, daß ein vorgebbarer zeitlicher Verlauf des Druckes während der Durchführung eines Blasvorganges mindestens in der Umgebung eines Drucksensors (57) mit einer vorgebbaren maximalen Toleranz erzeugt wird und daß der zeitliche Verlauf eines Prozeßdruckes eines Blasgases zur Expansion des Vorformlings (1) in den Behälter (2) vorgegeben wird.

2. Verfahren nach Anspruch 1, **dadurch gekennzeichnet, daß** als Stelleinrichtung (41) ein elektromechanisch betätigtes Ventil gesteuert wird.

3. Verfahren nach Anspruch 1 oder 2, **dadurch gekennzeichnet, daß** die Stelleinrichtung (41) von einer programmierbaren Steuerung angesteuert wird.

4. Verfahren nach einem der Ansprüche 1 bis 3, **dadurch gekennzeichnet, daß** als Stelleinrichtung (41) ein Proportionalventil angesteuert wird.

5. Verfahren nach einem der Ansprüche 1 bis 4, **dadurch gekennzeichnet, daß** als Stelleinrichtung (41) ein Drei-Wege-Proportionalventil angesteuert wird.

6. Verfahren nach einem der Ansprüche 1 bis 5, **dadurch gekennzeichnet, daß** eine Druckversorgung für mindestens eine auf einem rotierenden Blasrad (25) positionierte Blasstation (3) gesteuert wird.

7. Verfahren nach einem der Ansprüche 1 bis 6, **dadurch gekennzeichnet, daß** von der Stelleinrichtung (41) der geregelte Druck mit geringem räumlichen Abstand zur Aufnahmeeinrichtung bereitgestellt wird.

8. Verfahren nach einem der Ansprüche 1 bis 7, **dadurch gekennzeichnet, daß** die Stelleinrichtung (41) gemeinsam mit der Aufnahmeeinrichtung von einem rotierenden Tragrad transportiert wird.

9. Verfahren nach einem der Ansprüche 1 bis 8, **dadurch gekennzeichnet, daß** ein Überdruck gesteuert wird.

10. Verfahren nach Anspruch 9, **dadurch gekennzeichnet, daß** ein Druck mit einem Druckniveau von bis zu 40 bar gesteuert wird.

11. Verfahren nach einem der Ansprüche 1 bis 10, **dadurch gekennzeichnet, daß** der Druck von einem zweistufigen Proportionalventil geregelt wird.

12. Vorrichtung zur Blasformung von Behältern mit einer Heizeinrichtung für spritzgegossene Vorformlinge und einer pneumatischen Steuerung, die eine im Bereich einer Versorgungsleitung (42) zwischen einer Betriebsmittelquelle (43) für ein pneumatisches Betriebsmittel und einer Aufnahmeeinrichtung (44) für Werkstücke angeordnete Stelleinrichtung (41) aufweist, die zur Vorgabe eines zeitlich veränderlichen Druckes im Bereich der Aufnahmeeinrichtung (44) angesteuert ist, **dadurch gekennzeichnet, daß** die Stelleinrichtung (41) mit einer Regeleinrichtung (58) gekoppelt ist, die eine Verbindung zu mindestens einem Drucksensor (57) aufweist und daß die Regeleinrichtung (58) einen Verlaufsspeicher (59) für ein Sollwertprofil des zeitlichen Druckverlaufes während der Durchführung eines Blasvorganges aufweist sowie mit einer Ablaufsteuerung (64) gekoppelt ist, die zyklisch eine Generierung des Druckverlaufes entsprechend dem abgespeicherten Sollwertprofil derart vorgibt, daß der zeitliche Verlauf eines Prozeßdruckes eines Blasgases zur Expansion des Vorformlings (1) in den Behälter (2) definiert ist.

13. Vorrichtung nach Anspruch 12, **dadurch gekennzeichnet, daß** die Stelleinrichtung (41) als ein elektrisch gesteuertes Ventil ausgebildet ist.

14. Vorrichtung nach Anspruch 12 oder 13, **dadurch gekennzeichnet, daß** die Ablaufsteuerung (64) als programmierbare Steuerung ausgebildet ist.

15. Vorrichtung nach einem der Ansprüche 12 bis 14, **dadurch gekennzeichnet, daß** die Stelleinrichtung (41) als ein Proportionalventil ausgebildet ist.

16. Vorrichtung nach einem der Ansprüche 12 bis 14,**dadurch gekennzeichnet, daß** die Stelleinrichtung (41) als ein Drei-Wege-Proportionalventil ausgebildet ist.

17. Vorrichtung nach einem der Ansprüche 12 bis 16, **dadurch gekennzeichnet, daß** die Stelleinrichtung (41) mit mindestens einer auf einem rotierenden Blasrad (25) angeordneten Blasstation (3) verbunden ist.

18. Vorrichtung nach einem der Ansprüche 12 bis 17, **dadurch gekennzeichnet, daß** die Stelleinrichtung (41) mit einem räumlich geringen Abstand zur Aufnahmeeinrichtung angeordnet ist.

19. Vorrichtung nach einem der Ansprüche 12 bis 18, **dadurch gekennzeichnet, daß** die Stelleinrichtung (41) gemeinsam mit der Aufnahmeeinrichtung auf einem rotierenden Tragrad angeordnet ist.

20. Vorrichtung nach einem der Ansprüche 12 bis 19, **dadurch gekennzeichnet, daß** die Stelleinrichtung (41) zur Regelung eines Überdruckes ausgebildet ist.

21. Vorrichtung nach Anspruch 20, **dadurch gekennzeichnet, daß** die Stelleinrichtung (41) zur Regelung eines Überdruckes mit einem Druck von bis zu 40 bar ausgebildet ist.

22. Vorrichtung nach einem der Ansprüche 12 bis 21, **dadurch gekennzeichnet, daß** die Stelleinrichtung (41) zur Durchführung einer zweistufigen Regelung ausgebildet ist.

23. Vorrichtung nach einem der Ansprüche 12 bis 22, **dadurch gekennzeichnet, daß** die Stelleinrichtung (41) mit einem von einem Ventilkörper (46) mindestens bereichsweise verschließbaren Strömungsweg versehen ist.

24. Vorrichtung nach einem der Ansprüche 12 bis 23, **dadurch gekennzeichnet, daß** ein Innenraum (50) der Stelleinrichtung (41) über einen Druckeinlaß (51) mit der Betriebsmittelquelle (43) verbindbar ist.

25. Vorrichtung nach einem der Ansprüche 12 bis 24, **dadurch gekennzeichnet, daß** der Innenraum (50) der Stelleinrichtung (41) über einen Entlüftungsanschluß (53) mit einer Umgebung verbindbar ist.

26. Vorrichtung nach einem der Ansprüche 12 bis 25, **dadurch gekennzeichnet, daß** der Innenraum (50) der Stelleinrichtung (41) über einen Druckauslaß (52) mit der Aufnahmeeinrichtung (44) verbindbar ist.

27. Vorrichtung nach einem der Ansprüche 12 bis 26, **dadurch gekennzeichnet, daß** der Ventilkörper (46) von einem elektrisch gesteuerten Proportionalmagneten (48) entgegen einer Kraft einer Rückstellfeder (49) positionierbar angeordnet ist.

## Claims

1. Method for pneumatically controlling a blowing machine for the production of containers (2) from injection-moulded preforms (1), wherein, in the region of a supply line (42) between an operating agent source (43) for a pneumatic operating agent and a receiving means (44) for receiving workpieces, a supply of the operating agent is controlled by at least one adjustment means (41) and wherein the adjustment means (41) generates a time-variable pressure in the region of the receiving means (44), **characterised in that** the adjustment means (41) is regulated in such a way that a predeterminable time characteristic of the pressure is produced during the performance of a blowing process, at least in the environment of a pressure sensor (57) having a predeterminable maximum tolerance, and **in that** the time flow of a process pressure of a blowing gas for expanding the preform (1) into the container (2) is predetermined.

2. Method according to claim 1, **characterised in that** an electromechanically actuated valve is controlled as the adjustment means (41).

3. Method according to either claim 1 or claim 2, **characterised in that** the adjustment means (41) is activated by a programmable controller.

4. Method according to any one of claims 1 to 3, **characterised in that** a proportional valve is activated as the adjustment means (41).

5. Method according to any one of claims 1 to 4, **characterised in that** a three-way proportional valve is activated as the adjustment means (41).

6. Method according to any one of claims 1 to 5, **characterised in that** a pressure supply means is controlled for at least one blowing station (3) positioned on a rotating blowing wheel (25).

7. Method according to any one of claims 1 to 6, **characterised in that** the adjustment means (41) provides the regulated pressure in close proximity to the receiving means.

8. Method according to any one of claims 1 to 7, **characterised in that** the adjustment means (41) is conveyed, together with the receiving means, by a rotating support wheel.

9. Method according to any one of claims 1 to 8, **characterised in that** an excess pressure is controlled.

10. Method according to claim 9, **characterised in that** a pressure is controlled at a pressure level of up to 40 bar.

11. Method according to any one of claims 1 to 10, **characterised in that** the pressure is regulated by a two-stage proportional valve.

12. Device for the blow-moulding of containers using a heating means for injection-moulded preforms and a pneumatic controller having an adjustment means (41) which is arranged in the region of a supply line (42) between an operating agent source (43) for a pneumatic operating agent and a receiving means (44) for receiving workpieces and is activated for defining a time-variable pressure in the region of the receiving means (44), **characterised in that** the adjustment means (41) is coupled to a regulating means (58) having a connection to at least one pressure sensor (57) and **in that** the regulating means (58) has a pattern memory (59) for a desired value profile of the pressure flow time during the performance of a blowing process and is coupled to a sequence controller (64) which cyclically defines generation of the pressure flow corresponding to the stored desired value profile in such a way that the time flow of a process pressure of a blowing gas for expansion of the preform (1) into the container (2) is defined.

13. Device according to claim 12, **characterised in that** the adjustment means (41) is configured as an electrically controlled valve.

14. Device according to either claim 12 or claim 13, **characterised in that** the sequence controller (64) is configured as a programmable controller.

15. Device according to any one of claims 12 to 14, **characterised in that** the adjustment means (41) is configured as a proportional valve.

16. Device according to any one of claims 12 to 14, **characterised in that** the adjustment means (41) is configured as a three-way proportional valve.

17. Device according to any one of claims 12 to 16, **characterised in that** the adjustment means (41) is connected to at least one blowing station (3) arranged on a rotating blowing wheel (25).

18. Device according to any one of claims 12 to 17, **characterised in that** the adjustment means (41) is arranged in close proximity to the receiving means.

19. Device according to any one of claims 12 to 18, **characterised in that** the adjustment means (41) is arranged, together with the receiving means, on a rotating support wheel.

20. Device according to any one of claims 12 to 19, **characterised in that** the adjustment means (41) is configured for regulating an excess pressure.

21. Device according to claim 20, **characterised in that** the adjustment means (41) is configured for regulating an excess pressure at a pressure of up to 40 bar.

22. Device according to any one of claims 12 to 21, **characterised in that** the adjustment means (41) is configured for carrying out a two-stage regulation process.

23. Device according to any one of claims 12 to 22, **characterised in that** the adjustment means (41) is provided with a flow path which can be sealed by a valve body (46) at least in certain regions.

24. Device according to any one of claims 12 to 23, **characterised in that** an interior (50) of the adjustment means (41) is connectable to the operating agent source (43) via a pressure inlet (51).

25. Device according to any one of claims 12 to 24, **characterised in that** the interior (50) of the adjustment means (41) is connectable to an environment via a ventilation connection (53).

26. Device according to any one of claims 12 to 25, **characterised in that** the interior (50) of the adjustment means (41) is connectable to the receiving means (44) via a pressure outlet (52).

27. Device according to any one of claims 12 to 26, **characterised in that** the valve body (46) of an electrically controlled proportional magnet (48) is arranged so that it can be positioned counter to a force of a readjusting spring (49).

## Revendications

1. Procédé pour la commande pneumatique d'une machine de soufflage pour la fabrication de récipients (2) à partir de préformes (1) moulées par injection, dans lequel, dans la région d'une conduite d'alimentation (42), entre une source d'un agent de service(43) pour un agent pneumatique et une installation de réception (44) pour les pièces, une alimentation en agent est commandée par au moins un dispositif de commande (41) et reliée à un capteur de pression, et dans lequel, au moyen dudit dispositif de commande (41), est générée, dans la région de l'installation de réception (44), une pression qui peut être modifiée en fonction du temps,
**caractérisé en ce que**
le dispositif de commande (41) est réglé de sorte qu'une évolution temporelle de la pression, pouvant être prédéterminée, soit générée, pendant la réalisation d'un processus de soufflage, au moins dans l'entourage d'une sonde manométrique (57), avec une tolérance maximale, qui peut être prédéfinie, et **en ce que** l'évolution dans le temps d'une pression de service d'un gaz de soufflage est prédéterminée pour l'expansion de la préforme (1) en un récipient (2).

2. Procédé selon la revendication 1, **caractérisé en ce que**, comme dispositif de commande (41), est commandé une soupape actionnée électro-mécaniquement .

3. Procédé selon revendication 1 ou 2, **caractérisé en ce que** le dispositif de commande (41) est activé par une commande programmable.

4. Procédé selon l'une des revendications 1 à 3, **caractérisé en ce qu'**une soupape proportionnelle est activée en tant que dispositif de commande (41).

5. Procédé selon l'une des revendications 1 à 4, **caractérisé en ce qu'**une soupape proportionnelle à trois voies est activée en tant que dispositif de commande (41).

6. Procédé selon l'une des revendications 1 à 5, **caractérisé en ce qu'**une alimentation en pression pour au moins un poste de soufflage (3), positionné sur une tourelle de soufflage rotative (25), est commandé.

7. Procédé selon l'une des revendications 1 à 6, **caractérisé en ce que**, par le dispositif de commande (41), la pression réglée est délivrée à une faible distance spatiale de l'installation de réception.

8. Procédé selon l'une des revendications 1 à 7, **caractérisé en ce que** le dispositif de commande (41) est transporté, en commun avec l'installation de réception, par une tourelle de support rotative.

9. Procédé selon l'une des revendications 1 à 8, **caractérisé en ce qu'**est commandée une surpression.

10. Procédé selon la revendication 9, **caractérisé en ce qu'**est commandée une pression à un niveau de pression allant jusqu'à 40 bars.

11. Procédé selon l'une des revendications 1 à 10, **caractérisé en ce que** la pression est commandée par une soupape proportionnelle à deux étages.

12. Dispositif pour le formage par soufflage de récipients, avec un dispositif de chauffage, pour des préformes moulées par injection, et avec une commande pneumatique qui présente un dispositif de commande (41), agencé, dans le domaine d'une conduite d'alimentation (42), entre une source d'agent de service (43) pour un agent pneumatique et une installation de réception (41), lequel est activé pour la prédétermination d'une pression, pouvant être modifiée au cours du temps, dans la région de l'installation de réception (44), **caractérisé en ce que** le dispositif de commande (41) est couplé avec un organe de réglage (58) qui présente une communication avec au moins une sonde manométrique (57), et **en ce que** l'organe de réglage (58) présente une mémoire d'évolution (59) pour un profil de valeur de consigne de l'évolution de la pression au cours du temps pendant l'exécution d'un processus de soufflage, ainsi qu'avec une commande de déroulement (64) qui prédétermine, par cycles, une génération d'une évolution de la pression en fonction du profil de valeur de consigne mémorisé, de sorte que l'évolution au cours du temps d'une pression de processus d'un gaz de soufflage pour l'expansion de la préforme (1) en récipient (2) soit définie.

13. Dispositif selon la revendication 12, **caractérisé en ce que** le dispositif de commande (41) est conçu sous la forme d'une soupape à commande électrique.

14. Dispositif selon revendication 12 ou 13, **caractérisé en ce que** la commande du déroulement (64) est conçue en tant que commande programmable.

15. Dispositif selon l'une des revendications 12 à 14, **caractérisé en ce que** le dispositif de commande (41) est réalisé sous la forme d'une soupape proportionnelle.

16. Dispositif selon l'une des revendications 12 à 14, **caractérisé en ce que** le dispositif de commande (41) est réalisé sous la forme d'une soupape proportionnelle à trois voies.

17. Dispositif selon l'une des revendications 12 à 16, **caractérisé en ce que** le dispositif de commande (41) est relié à au moins un poste de soufflage (3) agencé sur une tourelle de soufflage rotative (25).

18. Dispositif selon l'une des revendications 12 à 17, **caractérisé en ce que** le dispositif de commande (41) est disposé à une faible distance de l'installation de réception.

19. Dispositif selon l'une des revendications 12 à 18, **caractérisé en ce que** le dispositif de commande (41) est agencé, en commun avec l'installation de réception, sur une tourelle de support rotative.

20. Dispositif selon l'une des revendications 12 à 19, **caractérisé en ce que** e dispositif de commande (41) est conçu pour la régulation d'une surpression.

21. Dispositif selon la revendication 20, **caractérisé en ce que** le dispositif de commande (41) est conçu pour la régulation d'une surpression de jusqu'à 40 bars.

22. Dispositif selon l'une des revendications 12 à 21, **caractérisé en ce que** le dispositif de commande (41) est conçu pour la réalisation d'un réglage à deux étapes.

23. Dispositif selon l'une des revendications 12 à 22, **caractérisé en ce que** le dispositif de commande (41) est pourvu d'une voie d'écoulement qui peut être fermée, au moins par sections, par un corps de soupape (46).

24. Dispositif selon l'une des revendications 12 à 23, **caractérisé en ce qu'**un espace intérieur (50) du dispositif de commande (41) peut être relié à une source d'agent de service (43) par l'intermédiaire d'une admission de pression (51).

25. Dispositif selon l'une des revendications 12 à 24, **caractérisé en ce que** l'espace intérieur (50) du dispositif de commande (41) peut être relié à un environnement par l'intermédiaire d'un raccord de désaération (53).

26. Dispositif selon l'une des revendications 12 à 25, **caractérisé en ce que** l'espace intérieur (50) du dispositif de commande (41) peut être relié à l'installation de réception (44) par l'intermédiaire d'une sortie de pression (52).

27. Dispositif selon l'une des revendications 12 à 26, **caractérisé en ce que** le corps de soupape (46) est agencé en pouvant être positionné par un aimant proportionnel (48) à commande électrique, contre une force d'un ressort de rappel (49).
